# EUROPEAN PATENT APPLICATION

(11) **EP 0 551 874 A2**
(43) Date of publication of application: **21.07.1993**
(21) Application number: 93100385.9
(22) Date of filing: 13.01.1993
(51) Int. Cl.: G01C 19/72, H04N 1/028

(54) **Fiber optic gyro**

(30) Priority: 16.01.1992 JP 5272/92; 17.01.1992 JP 6458/92
(71) Applicant: JAPAN AVIATION ELECTRONICS INDUSTRY, LIMITED, Shibuya-ku Tokyo (JP)
(72) Inventor: Ohno, Aritaka, c/o Japan Aviation Elec. Ind. Ltd., Tokyo (JP); Motohara, Shinji, c/o Japan Aviation El. Ind. Ltd., Tokyo (JP)
(74) Representative: Hoffmann, Eckart, Dipl.-Ing.

(57) **Abstract**

Light emitted from a semiconductor light emitting element (11A) in a light source unit (11) is provided to an optical splitter/coupler (14), from which it is provided as clockwise and counterclockwise light beams (LB1, LB2) to both ends of an optical fiber coil (16), respectively. An optical phase modulator (17) is interposed between one end of the optical fiber coil and the optical splitter/coupler. The both light beams having propagated through the optical fiber coil interfere with each other in the optical splitter/coupler. The resulting interference light is applied to a front light emitting end face of the semiconductor light emitting element and is emitted from its rear light emitting end face, together with a backward light beam (LB2), thereafter being received by a light receiving element (11C). A DC component of the output from the light receiving element is input into a quantity-of-light stabilizer (11D) to stabilize the power of light that is emitted from the light emitting element. A high-frequency component of the output from the light receiving element is synchronously detected by a synchronous detector (21).

## Description

### BACKGROUND OF THE INVENTION

The present invention relates to a fiber optic gyro in which clockwise and counterclockwise light beams are caused to propagate through an optical fiber coil and their phase difference is detected to thereby detect an angular rate applied to the optical fiber coil about the axis thereof.

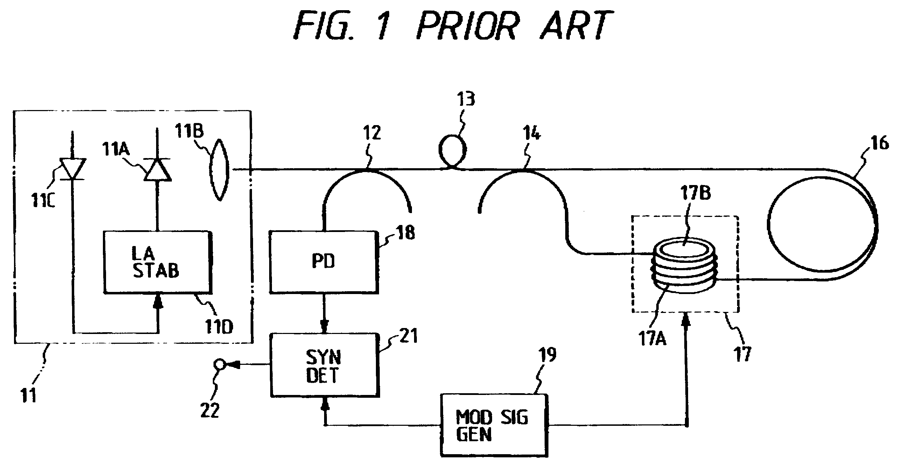

Fig. 1 shows a conventional fiber optic gyro. Light emitted from a light source unit 11 passes through a detecting optical fiber coupler or similar optical coupler 12 and enters into a polarizer 13, wherein its component in a predetermined direction of polarization alone is extracted. The light from the polarizer 13 is split by an optical splitter/coupler or similar means 14 into two light beams, one of which is provided as a clockwise light beam to one end of an optical fiber coil 16 and the other of which is provided as a counterclockwise light beam to the other end of the optical fiber coil 16 via an optical phase modulator 17.

The clockwise and counterclockwise light beams, after having propagated through the optical fiber coil 16, return to the optical splitter/coupler 14, wherein they are combined to interfere with each other. The resulting interference light is provided to the polarizer 13, wherein its component only in a predetermined direction of polarization is extracted. The light having thus passed through the polarizer 13 is branched by the detecting optical coupler 12 into a photodetector 18 for conversion into an electrical signal corresponding to the intensity of the light. A periodic function from a modulation signal generator 19, for example, a sine-wave signal of tens of kilohertz, is applied to the optical phase modulator 17 to drive it to modulate the phase of the light passing therethrough. The output of the photodetector 18 is provided to a synchronous detector 21, wherein it is synchronously detected by a reference signal from the modulation signal generator 19, and the detected output is provided to an output terminal 22.

With no angular rate applied to the optical fiber coil 16 about its axis, no phase difference exists between the clockwise and counterclockwise light beams having propagated through the optical fiber coil 16 and the output of the synchronous detector 21 is also zero. When an angular rate is being applied to the optical fiber coil 16 about its axis, the phase difference corresponding to the angular rate is introduced between the clockwise and counterclockwise light beams and the synchronous detector 21 yields an output of a polarity and a level corresponding to the direction and magnitude of the applied angular rate, permitting the detection of the applied angular rate.

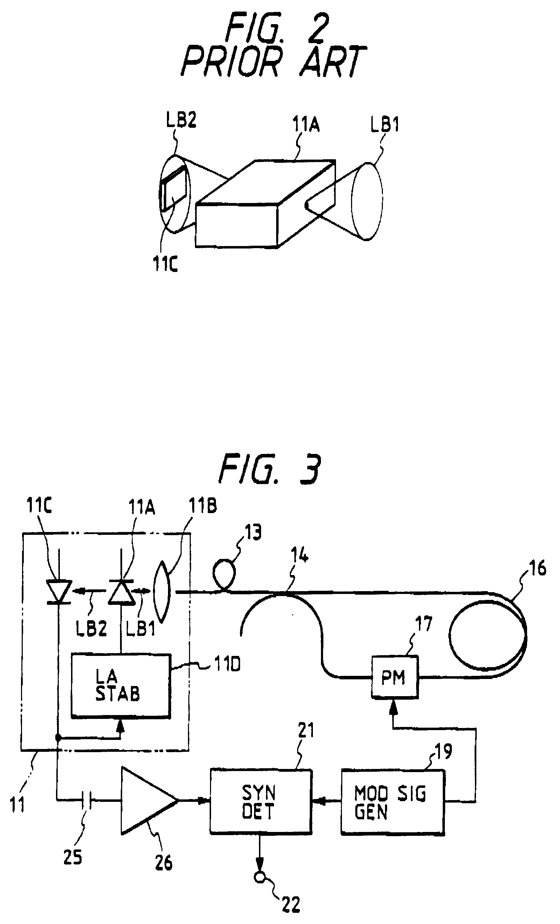

To prevent a change in the level of light that is provided from a light emitting element 11A in the light source unit 11 via a lens 11B to the input end of the detecting optical coupler 12, the light emitted from the light emitting element 11A is received by a light receiving element 11C and its output is applied to a light power stabilizer 11D. The light power stabilizer 11D controls the light emitting element 11A so that the power of light received by the light receiving element 11C may always remain at a fixed level. The light emitting element 11A is usually formed by a semiconductor laser, super-luminescent diode, or similar device. Such a semiconductor light emitting element emits a forward light beam LB1 from one end face and a backward light beam LB2 from the opposite end face as shown in Fig. 2. The forward light beam LB1 and the backward light beam LB2 are proportional to each other in level (i.e. in the power of light). The forward light beam LB1 is provided via the lens 11B to the input end of the detecting optical coupler 12 and the backward light beam LB2 is applied to the light receiving element 11C.

The conventional fiber optic gyro includes the optical couplers 12 and 14, and hence is large in the number of parts used and expensive accordingly, and besides the number of connections of the optical path is large -- this also raises the manufacturing costs of the fiber optic gyro.

The optical modulator 17 is composed of a piezoelectric ceramic bobbin 17B covered all over its inner and outer peripheral surfaces with electrodes (not shown), respectively, and an optical fiber 17A wound around the bobbin 17B. By applying a modulating signal across the thickness of the piezoelectric ceramic bobbin 17B to thereby expand or contract it radially, the optical fiber 17A wound on the bobbin 17B is expanded or contracted lengthwise thereof accordingly, whereby light passing through the optical fiber 17A can be phase modulated.

In the conventional fiber optic gyro the optical phase modulator 17 is interposed between the optical splitter/coupler 14 and the optical fiber coil 16, and hence there are extra-length portions of optical fibers for connection between the optical splitter/coupler 14 and the optical fiber coil 16, between the optical phase modulator 17 and the optical splitter/coupler 14 and between the optical phase modulator 17 and the optical fiber coil 16. When these extra-length portions are shifted or vibrated by external vibration or shock, an error will be induced in the detected angular rate. To avoid this, the extra-length portions need to be fixed to supports (not shown) on which the optical fiber coil 16, the optical phase modulator 17 and the optical splitter/coupler 14 are mounted. Accordingly, the prior art fiber optic gyro is bulky and its manufacture involves extra fixing work. Moreover, since the optical phase modulator 17 and the optical fiber coil 16 are separate from each other, a change in the temperature difference between them also increases the error in the detected angular rate and a large space is needed to house them.

### SUMMARY OF THE INVENTION

It is therefore an object of the present invention to provide a simple-structured, low-cost fiber optic gyro which is smaller in the number of parts used and in the number of connections of the optical path than in the prior art fiber optic gyro.

Another object of the present invention is to provide a fiber optic gyro which is substantially insusceptible to the influence of external disturbance, and hence is small in the detection of the angular rate.

According to a first aspect of the present invention, a semiconductor light emitting element of the type emitting forward and backward light beams is used as the light emitting element of the light source unit. The forward light beams is provided directly to optical splitter/coupler means, whereby the light is split into two light beams, one of which is provide as a clockwise light beam to one end of an optical fiber coil and the other of which is provided as a counterclockwise light beam to the other end of the optical fiber coil via an optical phase modulator. The optical phase modulator modulates the phase of the light by an alternating modulating signal. The clockwise and counterclockwise light beams, after propagation through the optical fiber coil, are combined by the optical splitter/coupler means, from which interference light is output. The interference light is provided to the semiconductor light emitting element, from which it is emitted rearwardly thereof together with the backward light beam. The thus emitted light is received by photodetector means. The output of the photodetector means is synchronously detected by a modulating signal, thereby detecting an angular rate applied to the optical fiber coil.

Thus, according to the first aspect of the invention, the fiber optic gyro is simple in construction and low-cost, because no detecting optical coupler is used.

According to a second aspect of the present invention, the light emitted from the light source unit is split by optical splitter/coupler means into two light beams, one of which is provided as a clockwise light beam to one end of the optical fiber coil and the other of which is provided as a counterclockwise light beam to the other end of the optical fiber coil via an optical phase modulator wherein it is phase modulated by an alternating modulating signal. The clockwise and counterclockwise light beams, after having propagated through the optical fiber coil, are caused by the optical splitter/coupler means to interfere with each other. The resulting interference light is converted by photodetector into an electric signal, which is synchronously detected by the above-mentioned modulating signal, and the angular rate applied to the optical fiber coil about its axis is detected from the synchronously detected output. An optical phase modulating part bobbin is fixedly mounted at one end of a fiber coil bobbin with the optical fiber coil wound thereon. The optical phase modulating part bobbin is coaxial with the fiber coil bobbin and is capable of expanding or contracting its radius by a modulating signal voltage. An optical fiber connected to the optical fiber coil without intervening an extra-length portion therebetween, is wound around the optical phase modulating part bobbin to form the above-mentioned optical phase modulator, and the radius of the optical phase modulating part bobbin is expanded or contracted by the alternating modulating signal.

The above-described structure according to the second aspect of the invention is small in the number of extra-length portions of the optical fiber for connection, and hence consumes less space than the prior art and simplifies extra-length portion fixing work. Moreover, since the optical fiber coil and the optical phase modulator are formed as a unitary structure, a change in the temperature difference between them is so small that an error in the detection of the angular rate is reduced. In addition, such a unitary structure of the optical fiber coil and the optical phase modulator reduces the space for housing them and permits simplification of the fiber optic gyro structure.

### BRIEF DESCRIPTION OF THE DRAWINGS

Fig. 1 is a block diagram showing a conventional fiber optic gyro;
Fig. 2 is a perspective view of a semiconductor light emitting element for use in the fiber optic gyro;
Fig. 3 is a block diagram illustrating a first embodiment of the present invention;
Fig. 4 is a block diagram illustrating a second embodiment of the present invention; and
Fig. 5 is a block diagram illustrating a third embodiment of the present invention.

### DESCRIPTION OF THE PREFERRED EMBODIMENTS

Fig. 3 illustrates an embodiment according to the first aspect of the present invention, in which the parts corresponding to those in Fig. 1 are identified by the same reference numerals. As in the case of Fig. 1, this embodiment also employs, as the light emitting element 11A of the light source unit 11, a semiconductor light emitting element which emits light both forwardly and rearwardly thereof. In this embodiment, however, the detecting optical coupler 12 in Fig. 1 is not used and the forward light beam LB1 from the light emitting element 11A is incident to the polarizer 13 via the lens 11B. On the other hand, the light receiving element 11C, which receives the backward light beam LB2 from the semiconductor light emitting element 11A, is used also as the photodetector 18 utilized in the prior art example of Fig. 1. The output of the light receiving element 11C is supplied to the light amount stabilizer 11D and, at the same time, to an amplifier 26 after its DC component is blocked by a capacitor 25 as required. The amplified signal from the amplifier 26 is fed to the synchronous detector 21.

The forward light beam LB1 from the semiconductor light emitting element 11A is split by the optical splitter/coupler 14 into two light beams, which are provided as clockwise and counterclockwise light beams to opposite ends of the optical fiber coil 16. The clockwise light beam emitted from the optical fiber coil 16 and the counterclockwise light beam incident thereto are phase modulated by a modulating signal of tens of kilohertz in the optical phase modulator 17. The both light beams emitted from the optical fiber coil 16 interfere with each other in the optical splitter/coupler 14, and the resulting interference light passes through the polarizer 13 and the lens 11B and then enters into the front light emitting end face of the semiconductor light omitting element 11A.

Since the semiconductor light emitting element 11A usually has an optical waveguide formed between the front and rear light emitting end faces, the interference light having re-entered into the front end face passes through the semiconductor light emitting element 11A and is then emitted together with the backward light beam LB2. The output light is converted by the light receiving element 11C into an electric signal. A DC component of the electric signal is utilized as a control signal by the light amount stabilizer 11D to keep constant the power of light of the forward light beam LB1 as in the case of the prior art. A high-frequency component (or modulated component) of the electric signal output from the light receiving element 11C is synchronously detected, by the modulating signal from the modulating signal generator 19, in the synchronous detector 21, by which the angular rate applied to the optical fiber coil 16 about its axis is detected and provided to the output terminal 22.

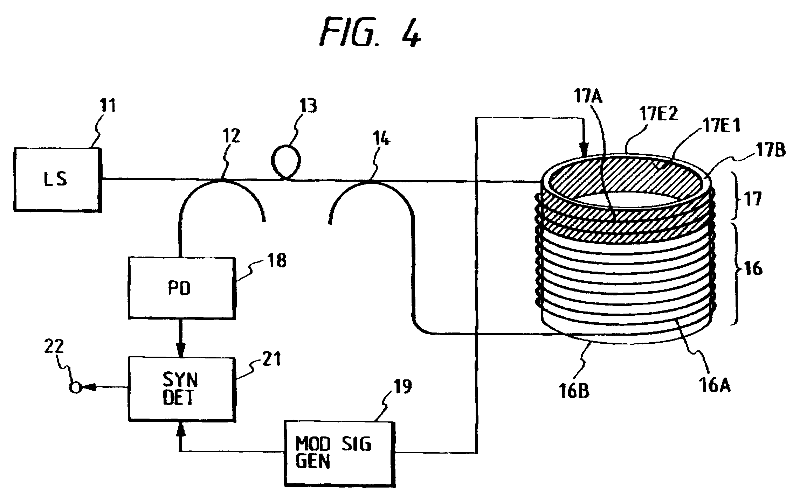

Fig. 4 illustrates an embodiment according to the second aspect of the present invention, in which the parts corresponding to those in Fig. 1 are identified by the same reference numerals. This embodiment is common to the prior art example of Fig. 1 in that the light from the light source unit 11 is provided to the optical splitter/coupler 14 via the detecting optical coupler 12 and the polarizer 13, but the embodiment differs from the prior art example in that a cylindrical optical phase modulator 17 of about the same diameter as that of the optical fiber coil 16 wound into a cylindrical form is fixedly mounted side by side to the coil 16 coaxially therewith. In this embodiment one end of a fiber coil bobbin 16B, around which an optical fiber 16A forming the optical fiber coil 16 is wound, is extended in its axial direction to form a phase modulating part bobbin 17B around which an optical fiber 17A constituting the optical phase modulator 17 is wound. The modulating part bobbin 17B is constructed so that its radius can be increased or decreased by an alternating voltage of the modulating signal.

The fiber coil bobbin 16B for the optical fiber coil 16 and the modulating part bobbin 17B are formed as one unitary cylindrical structure of a piezoelectric ceramics material such as PZT, and only those portions of inner and outer peripheral surfaces of the cylindrical structure corresponding to the modulating part bobbin 17B are coated with electrodes 17E1 and 17E2. By applying the modulating signal voltage across the both electrodes 17E1 and 17E2, the modulating part bobbin 17B can be expanded or contracted thickwise thereof, that is, in its radial direction. The optical fiber 16A at one end of the optical fiber coil 16 wound around the fiber coil bobbin 16B, is connected to the optical fiber 17A wound around the modulating part bobbin 17B, the winding end of the optical fiber 17A being led out of the bobbin 17B and connected to one branching end of the optical splitter/coupler 14. Thus, there is no extra-length portion for connection purpose between the optical fibers 16A and 17A. The optical fiber 17A way be continuous extension of the optical fiber 16A. The other end of the optical fiber coil 16 is connected directly to the other branching end of the optical splitter/coupler 14. The modulating signal from the modulating signal generator 19 is applied across the electrodes 17E1 and 17E2 of the modulating part bobbin 17B. Thus, the modulating part bobbin 17B and the optical fiber 17A wound thereon constitute the optical phase modulator 17.

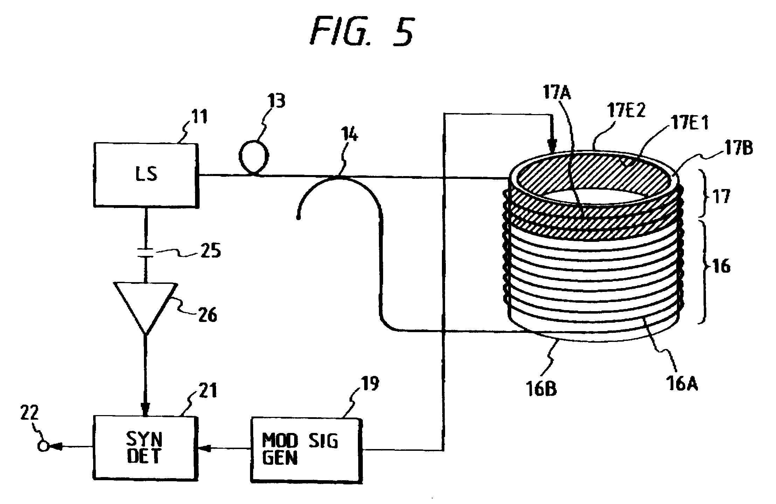

Fig. 5 illustrates a third embodiment of the present invention. This embodiment employs no detecting optical coupler as in the case of the Fig. 3 embodiment and has a construction in which the forward light beam emitted from the light source unit 11 of the same construction as in the case of Fig. 3 is provided via the polarizer 13 to the optical splitter/coupler 14 and the interference light from the optical splitter/coupler 14 is again provided via the polarizer 13 to the light source unit 11, wherein it is provided via the semiconductor light emitting element 11A to the light receiving element 11C for conversion into an electric signal. The high-frequency component of the electric signal is provided via the capacitor 25 and the amplifier 26 to the synchronous detector 21, wherein the angular rate applied to the optical fiber coil 16 is detected, and the detected output is provided to the terminal 22. Furthermore, in this embodiment the phase modulator 17 is formed integrally with the optical fiber coil 16 at one end thereof coaxially therewith as in the case of the Fig. 4 embodiment.

In this embodiment, since the detecting optical coupler 12 used in the Fig. 4 embodiment is not employed and since the optical phase modulator 17 is formed integrally with the optical fiber coil 16, the number of parts used is further reduced, and hence the space needed to house the parts is reduced accordingly. In addition, since there is no extra-length portion for connecting the optical phase modulator 17 and the optical fiber coil 16, the error in the detection of the angular rate by external disturbances (such as vibration and a temperature change) decreases correspondingly.

While in the embodiments of Figs. 4 and 5 the fiber coil bobbin 16B for the optical fiber coil 16 and the modulating part bobbin 17B are shown to be formed as a unitary structure of the same material, it is also possible that the bobbin 16B is made of a material different from the bobbin 17B, for example, aluminum, and bonded to the latter.

In each of the embodiments described above the detecting optical coupler 12 and/or optical splitter/coupler 14 may be formed by an optical IC. The present invention is applicable to a closed loop fiber optic gyro as well as to an open loop one.

As described above, according to the first aspect of the present invention, since the interference light is received via the semiconductor light emitting element 11A, it is possible to omit the detecting optical coupler used in the prior art example of Fig. 1 and hence decrease the number of parts used and the number of connections of the optical path, permitting easy and low-cost fabrication of the fiber optic gyro.

According to the second aspect of the present invention, since the optical fiber of the optical phase modulator 17 and the optical fiber of the optical fiber coil 16 are wound continuously around a unitary-structured bobbin, the extra-length portions can be reduced as a whole accordingly -- this lessens the influence of a temperature change, vibration, shock, or similar external disturbance, ensuring reduction of the error in the detection of the applied angular rate. Moreover, since the optical phase modulator 17 and the optical fiber coil 16 are formed integral with each other, the number of independent parts decreases, allowing ease in arranging the parts and reducing the space therefor accordingly.

It will be apparent that many modifications and variations may be effected without departing from the scope of the novel concepts of the present invention.

## Claims

1. A fiber optic gyro comprising:
a semiconductor light emitting element which emits forward and backward light beams from its front and rear end faces, respectively;
an optical fiber coil having two opposite ends;
optical splitter/coupler means which splits said forward light beam supplied thereto from said semiconductor light emitting element into two light beams, provides said two light beams as clcckwise and counterclockwise light beams to said two opposite ends of said optical fiber coil, receives said clockwise and counterclockwise light beams having propagated through said optical fiber coil, combines said clockwise and counterclockwise light beams emitted from said optical fiber coil and outputs interference light;
an optical phase modulator provided in series between one end of said optical splitter/coupler means and one end of said optical fiber coil, for phase modulating light passing therethrough;
modulating signal generating means which applied an alternating modulating signal to said optical phase modulator;
optical means which provides said forward light beam from said semiconductor light emitting element to said optical splitter/coupler means and said interference light from said optical splitter/coupler means to said front end face of said semiconductor light emitting element;
photodetector means which receives said interference light having passed through said semiconductor light emitting element and emitted from its rear and face, together with said backward light beam emitted therefrom and converts said interference light into an electric signal; and
synchronous detector means which synchronously detects a high-frequency component of said electric signal from said photodetector means by said modulating signal, thereby detecting an angular rate applied to said optical fiber coil.

2. The fiber optic gyro of claim 1 which further comprises quantity-of-light stabilizer means which stabilizes the power of light from said semiconductor light emitting element on the basis of a DC component of said electric signal from said photodetector means.

3. A fiber optic gyro comprising:
an optical fiber coil formed by winding an optical fiber around a bobbin;
an optical phase modulator having a bobbin portion which is coaxially fixed to one end of said bobbin of said optical fiber coil in side-by-side relation thereto and expands and contracts in its radial direction in response to an alternating modulating signal, said optical phase modulator being formed by winding around said bobbin portion a phase modulating optical fiber connected to one end of said optical fiber coil;
modulating signal generating means which applies said alternating modulating signal to said optical phase modulator;
light source means for emitting light;
optical splitter/coupler means which branches said light emitted from said light source means into two light beams, provides them as clockwise and counterclockwise light beams to both ends of said optical fiber coil and said optical phase modulator, combines said clockwise and counterclockwise light beams having propagated through said optical fiber coil and outputs interference light;
photodetector means which receives said interference light from said optical splitter/coupler means and converts it into an electric signal; and
synchronous detector means which synchronously detects said electric signal by said modulating signal, thereby detecting an angular rate applied to said optical fiber coil.

4. The fiber optic gyro of claim 3, wherein said phase modulating optical fiber is continuous extension of said optical fiber coil.

5. The fiber optic gyro of claim 3 wherein said bobbin of said optical fiber coil is formed as a unitary structure with said bobbin portion of said optical phase modulator, using the same piezoelectric material, and inner and outer peripheral surfaces of said bobbin portion of said optical phase modulator are covered with electrodes across which the voltage of said modulating signal is applied.

6. The fiber optic gyro of claim 3 or 4 wherein said light source means includes a semiconductor light emitting element for emitting forward and backward light beams from its front and rear end faces, and optical means for providing said forward light beam emitted from said semiconductor light emitting element to said optical splitter/coupler means and for providing said interference light from said optical splitter/coupler means to said front end face of said semiconductor light emitting element, and wherein said photodetector means receives said interference light having passed through said semiconductor light emitting element and emitted from its rear end face, together with said backward light beam emitted therefrom and converts said interference light into said electric signal.

7. The fiber optic gyro of claim 3 which further comprises quantity-of-light stabilizer means which stabilizes the power of light emitted from said semiconductor light emitting element on the basis of a DC variation component of said electric signal from said photodetector means.
